# EUROPÄISCHE PATENTSCHRIFT

(11) **EP 2 010 766 B1**
(45) Veröffentlichungstag und Bekanntmachung des Hinweises auf die Patenterteilung: **18.08.2010**
(21) Anmeldenummer: 07726519.7
(22) Anmeldetag: 27.02.2007
(51) Int. Cl.: F01N 3/20

(54) **BEHEIZTE HARNSTOFFLEITUNG FÜR ABGASNACHBEHANDLUNGSANLAGEN VON BRENNKRAFTMASCHINEN**
HEATED UREA CONDUIT FOR EXHAUST GAS AFTER TREATMENT SYSTEMS FOR INTERNAL COMBUSTION ENGINES
CONDUITE D'URÉE CHAUFFÉE POUR INSTALLATIONS DE RETRAITEMENT DES GAZ D'ÉCHAPPEMENT DE MOTEURS À COMBUSTION INTERNE

(30) Priorität: 13.04.2006 DE 102006017414
(43) Veröffentlichungstag der Anmeldung: 07.01.2009
(73) Patentinhaber: ContiTech Techno-Chemie GmbH, 61184 Karben (DE)
(72) Erfinder: SCHMELTER, Klaus, 59929 Brilon (DE); KIRSCH, Christof, 61194 Niddatal (DE)
(74) Vertreter: Finger, Karsten
(86) Internationale Anmeldenummer: PCT/EP2007/051820
(87) Internationale Veröffentlichungsnummer: WO 2007/118728

(56) Entgegenhaltungen:
- EP-A- 0 411 404
- EP-A- 0 709 565
- EP-A- 1 662 103
- GB-A- 1 081 889
- GB-A- 2 418 478
- US-B2- 6 845 611

## Beschreibung

Die Erfindung betrifft eine beheizte Harnstoffleitung für eine Abgasnachbehandlungsanlage von Brennkraftmaschinen.

Zur Verminderung von Stickoxidemissionen einer Brennkraftmaschine ist es bekannt, mit Hilfe der Selektiv-Catalytic-Reduktion-Technologie (SCR) Stickoxid in Luftstickstoff und Wasserdampf umzuwandeln. Als Reduktionsmittel wird wässrige Harnstofflösung verwandt, die in einem separaten Vorratsbehälter mitgeführt wird.

Die Schlauchleitungen zwischen dem Vorratsbehälter und der Abgasleitung müssen beheizbar sein, da die Gefahr des Einfrierens der wässrigen Harnstofflösung ab -11°C besteht. Es ist bekannt, elektrisch beheizbare Schläuche einzusetzen.

Der Erfindung liegt die Aufgabe zugrunde, eine beheizte Harnstoffleitung zu schaffen, die ohne die Verwendung elektrischer Energie ausreichend und sicher wirkt.

Dokument US6845611 B2 offenbart eine beheizte Harnstoffleitung wobei eine die Harnstofflösung führende Schlauchleitung parallel mit einem Brennstoffführende Schlauch verläuft.

Die Aufgabe wird erfindungsgemäß dadurch gelöst, dass eine die wässrige Harnstofflösung führende Schlauchleitung parallel mit einem Heizwasser führenden Schlauch verläuft und dass beide Schläuche von einem bei Erwärmung schrumpfenden Schlauch eng umfasst sind.

Durch die Erfindung wird der die Harnstofflösung führende Schlauch parallel mit einem Heizwasser führenden Schlauch verlegt, der vorzugsweise aus wärmeleitfähigem Elastomer besteht. Der bei Erwärmung schrumpfende Schlauch (Schrumpfschlauch) presst die beiden Schläuche zusammen, wodurch ein guter Wärmeübergang erreicht wird.

In vorteilhafter Ausgestaltung der Erfindung ist der Schrumpfschlauch ein Gewebeschrumpfschlauch. Das Gewebe kann beispielsweise aus Polyester sein, dass mit einem Polyolefin beschichtet ist.

Der Gewebeschrumpfschlauch bewirkt eine enge Berührung zwischen beiden parallel verlaufenden Schläuchen, was für einen guten Wärmeübergang sorgt. Der Gewebeschrumpfschlauch ist achsparallel zusammengenäht und weist eine ausreichende konstruktive Dehnung auf. Dieses führt zu einer Flexibilität, die für gute Verlegeeigenschaften des Schlauchpaketes innerhalb des Motorraumes benötigt werden.

Durch Erwärmen schrumpft das Gewebe, so dass die beiden das Schlauchpaket bildenden Schläuche konstant aneinander liegend verlaufen, wobei die Linienberührung sicher gehalten wird.

In weiterer vorteilhafter Ausgestaltung der Erfindung ist das durch den Schrumpfschlauch zusammengefasste Schlauchpaar von einem isolierenden Schaumstoffschlauch umgeben. Die vom Heizwasser abgegebene Wärme wird so zielgerichtet dem die Harnstofflösung führenden Schlauch zugeführt.

Anhand der Zeichnung wird ein Ausführungsbeispiel der Erfindung näher erläutert.

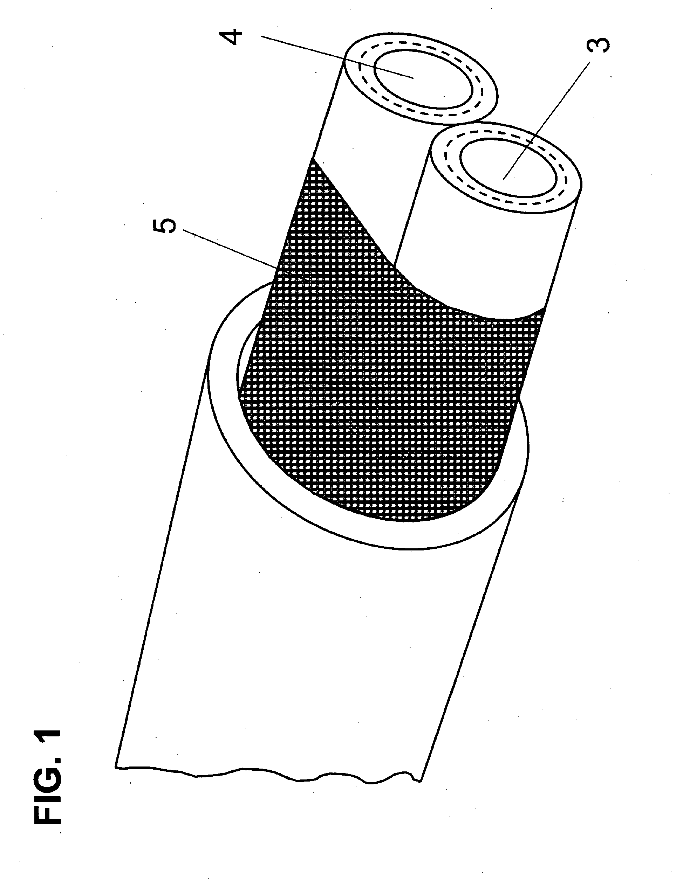

Es zeigt
- Fig. 1: in perspektivischer Darstellung das von einem Gewebeschrumpfschlauch zusammengefasste Schlauchpaar;

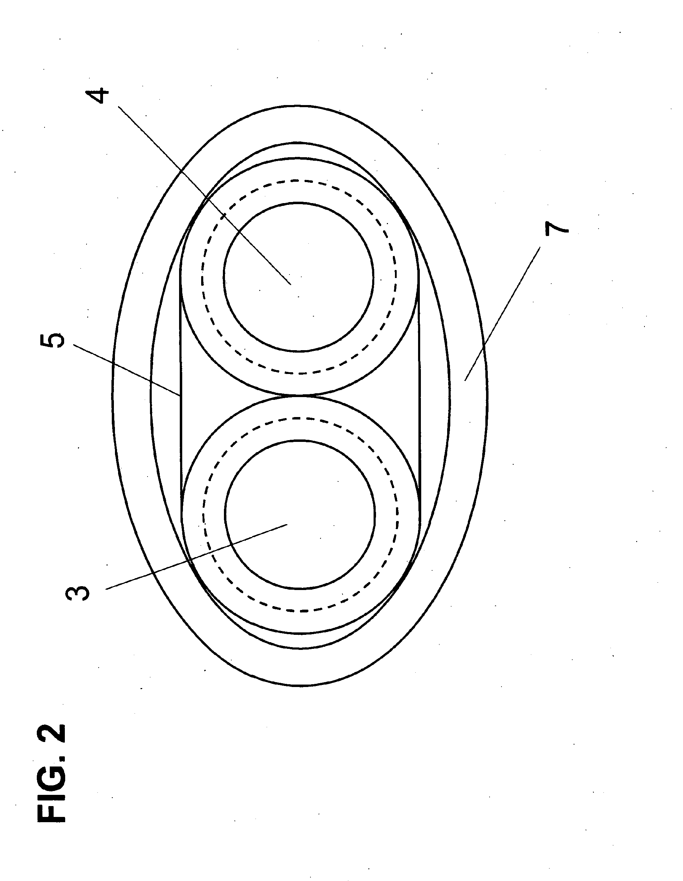

- Fig. 2: einen Querschnitt der in Fig. 1 gezeigten Anordnung.

Ein wässrige Harnstofflösung führender Schlauch 3 ist parallel neben einem Heizwasser führenden Schlauch 4 angeordnet. Beide Schläuche 3 und 4 sind von einem Gewebeschrumpfschlauch 5 umfasst, der bei Erwärmen Schrumpfeigenschaften aufweist. Die beiden von dem Gewebeschrumpfschlauch 5 umfassten medienführenden Schläuche 3 und 4 werden unter Linienberührung aneinander gepresst. Dadurch entsteht eine Art Wärmetauschereffekt. Die in dem Heizwasser des einen Schlauches 4 vorhandene Wärme wird an den die Harnstofflösung führenden Schlauch 3 abgegeben. Der Wärmeübergang reicht aus, dass die Harnstofflösung nicht einfriert.

Das von dem Gewebeschrumpfschlauch 5 umfasste Schlauchpaar 3 und 4 verläuft in einem isolierenden Schaumstoffschlauch 7.

## Patentansprüche

1. Beheizte Harnstoffleitung für Abgasnachbehandlungsanlagen von Brennkraftmaschinen,
**dadurch gekennzeichnet,**
**dass** eine die wässrige Harnstofflösung führende Schlauchleitung (3) parallel mit einem Heizwasser führenden Schlauch (4) verläuft und dass beide Schläuche (3 und 4) von einem bei Erwärmung schrumpfenden Schlauch (5) umfasst sind.

2. Beheizte Harnstoffleitung nach Anspruch 1, **dadurch gekennzeichnet,**
**dass** der Schrumpfschlauch (5) aus einem schrumpffähigen, flexiblen Gewebe besteht.

3. Beheizte Harnstoffleitung nach Anspruch 2, **dadurch gekennzeichnet, dass** das Gewebe ein mit Polyolefin beschichtetes Gewebe ist.

4. Harnstoffleitung nach einem der Ansprüche 1 bis 3, **dadurch gekennzeichnet, dass** das durch den Schrumpfschlauch (5) zusammengefasste Schlauchpaar (3 und 4) von einem isolierenden Schaumstoffschlauch (7) umgeben ist.

## Claims

1. Heated urea conduit for exhaust-gas aftertreatment systems of internal combustion engines, **characterized**
**in that** a hose conduit (3) which conducts the aqueous urea solution runs parallel to a hose (4) which conducts heating water, and in that the two hoses (3 and 4) are surrounded by a hose (5) which shrinks when heated.

2. Heated urea conduit as claimed in Claim 1, **characterized in that** the shrink hose (5) is composed of a shrinkable, flexible fabric.

3. Heated urea conduit as claimed in Claim 2, **characterized in that** the fabric is a fabric which is coated with polyolefin.

4. Urea conduit as claimed in one of Claims 1 to 3, **characterized in that** the hose pair (3 and 4) which is held together by the shrink hose (5) is surrounded by an insulating foam hose (7).

## Revendications

1. Conduit chauffé à urée pour installations de traitement des gaz d'échappement de moteurs à combustion interne,
**caractérisé en ce que**
un conduit flexible (3) qui transporte une solution aqueuse d'urée s'étend parallèlement à un conduit flexible (4) qui transporte de l'eau chaude et
**en ce que** les deux conduits flexibles (3 et 4) sont entourés par un conduit flexible (5) qui se rétrécit lorsqu'il est chauffé.

2. Conduit chauffé à urée selon la revendication 1, **caractérisé en ce que** le conduit flexible (5) rétrécissable est constitué d'un tissu flexible rétrécissable.

3. Conduit chauffé à urée selon la revendication 2, **caractérisé en ce que** le tissu est un tissu revêtu de polyoléfine.

4. Conduit chauffé à urée selon l'une des revendications 1 à 3, **caractérisé en ce que** la paire de conduits flexibles (3 et 4) entourés par le conduit flexible rétrécissable (5) est entourée par un conduit isolant (7) en mousse.
